# EUROPEAN PATENT SPECIFICATION

(11) **EP 1 308 423 B1**
(45) Date of publication and mention of the grant of the patent: **07.10.2009**
(21) Application number: 02015830.9
(22) Date of filing: 16.07.2002
(51) Int. Cl.: C03B 37/012, C03B 19/01, C03B 19/10, C01B 33/12, C03C 1/02

(54) **A method of producing glass of optical quality**
Verfahren zur Herstellung von Glas mit optischer Qualität
Méthode pour la fabrication de verre à haute qualité

(30) Priority: 30.10.2001 EP 01125855
(43) Date of publication of application: 07.05.2003
(73) Proprietor: Evonik Degussa GmbH, 45128 Essen (DE)
(72) Inventor: Oswald, Monika, Dr., 63454 Hanau (DE); Schneider, Gerrit, Dr., 63456 Hanau (DE); Meyer, Jürgen, Dr., 63811 Stockstadt (DE)

(56) References cited:
- EP-A- 0 863 108
- EP-A- 0 980 849

## Description

The invention relates to a method of producing glass of optical quality, by melting or, optionally by purifying a presintering composition, and to applying said method to depositing an optionally purified presintering composition on an optical fiber preform, in which a substantially-cylindrical preform that extends in a longitudinal direction is set into rotation about its axis in front of a plasma or a flame which moves back and forth substantially parallel to the longitudinal direction of the preform, and in which a first feed duct feeds grains of a presintering composition.

It is known to purify natural or synthetic silica by a method in which a plasma or a flame from a head energy supply means is fed by a first feed duct with grains of natural or synthetic silica, wherein a second duct feeds the plasma or flame with a fluorine or chlorine compounds mixed with a carrier gas, whereby the fluorine or chlorine compound can react with the alkali- or alkaline earth contained in the grains of the natural or synthetic silica (EP 0863 108 A1 and EP 0 863 108 A1).

In known manner, a preform is obtained by chemical vapor deposition implemented inside a tube mounted on a glassmaker's lathe, and which is subjected to a collapsing operation to form a solid preform.

For multimode fibers, that way of making preforms suffices. However, for monomode fibers it is advantageous to add material to the preform in order to increase its diameter and thus obtain, during fiber drawing, a continuous fiber that is several tens of kilometers long.

Material is added to the preform by means of a plasma torch. The preform is cylindrical in shape and it is set into rotation about its axis in front of the torch whose plasma is fed with grains of material, like a presintering composition.

The grains are melted and then deposited and vitrified on the preform. A plurality of passes are performed to build up to the desired diameter.

Depositing material, like a presintering composition suffers from a major drawback. Alkali elements such as sodium or lithium are present in non-negligible quantities in this type-of material, and they are present in the deposited grains, thereby encouraging the formation of bonds between the OH group and the dopant elements, such as germanium (Ge). Such bonds are absorbent at certain wavelengths, thereby increasing the attenuation losses of the optical fiber at said wavelengths.

The object of the invention is to provide a method of purifying a presintering composition.

The object of the invention is also to apply the method of purifying a presintering composition to depositing a presintering composition on an optical fiber preform, the deposit containing only a very small quantity of alkali or alkaline-earth elements.

The subject of the invention is defined by the appended claims Optical devices can be optical fiber form, crucibles, accessories, rod, high temperature resistent materials, glass preforms and/or optical lenses.

The plasma or flame is the seat of a chemical reaction in which the molten presintering composition react with the fluorine or chlorine compound of the carrier gas. Advantageously, the temperature of the plasma can be adjusted to obtain high efficiency in the reaction, given the feed rates of the ducts feeding the carrier gas and for feeding the presintering composition. A higher temperature makes it possible to maintain good reaction efficiency while increasing the feed rates of the feed ducts.

Also advantageously, it is possible to adjust the content of the fluorine or chlorine compound (preferably a fluorine compound) in the carrier gas as a function of the mean size of the presintering composition. Smaller granules make it possible to maintain good reaction efficiency with a carrier gas that is less rich in the fluorine or chlorine compound (preferably a fluorine compound).

By eliminating alkaline elements from the deposit of a presintering composition, it is possible to build up the optical devices using a starting material that is much less expensive.

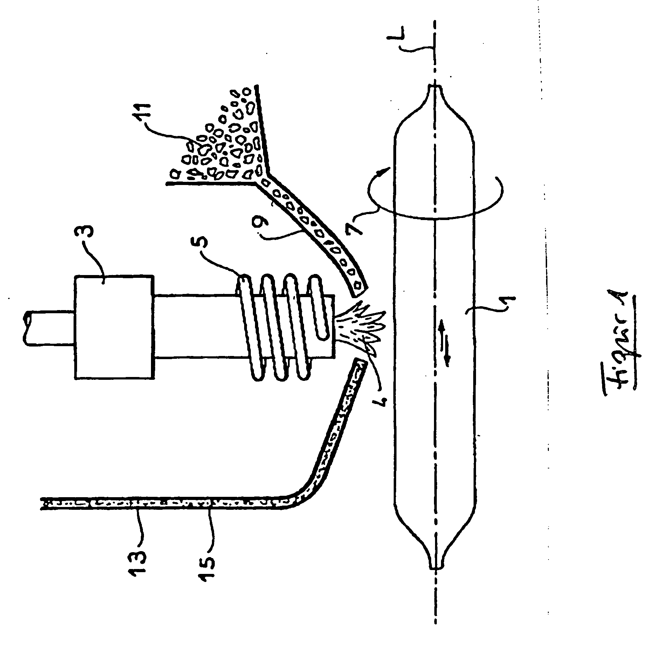

Other characteristics and advantages of the invention will appear on reading the following description of an example illustrated by the sole FIGURE which shows diagrammatically the items implemented when applying the method of melting or purifying a presintering composition during deposition on an optical fiber preform.

The method of melting or purifying a presintering composition makes it possible to deposit one or more layers of a presintering composition on optical devices and that contain only negligible amounts of alkali elements such as sodium or lithium, or of alkaline-eart elements.

The deposition operation, also known as a building-up operation, serves to increase the diameter of a preform, to enable a continuous fiber to be drawn therefrom that is several tens of kilometers long.

In the FIGURE, the method comprises a plasma torch 3 including electrical inductor components 5.

A preform 1 in the form of a cylinder extends in a longitudinal direction L and is caused to rotate about its axis as indicated by arrow 7.

The plasma torch 3 moves back and forth substantially parallel to the longitudinal direction L of the preform. The preform is rotated by a glassmaker's lathe (not shown). The chucks of the lathe drive two glass rods which are welded to the two ends of the preform. The lathe is placed in an enclosed box that provides protection against electromagnetic radiation and against gaseous discharges from the chemical reaction.

A first feed duct 9 delivers grains of a presintering composition 11 to the plasma.

The feed is performed merely by gravity. A valve (not shown) is placed outside the box to allow the feed rate to be adjusted.

A second feed duct 13 feeds the plasma with a gas 15 that conveys a given content of a fluorine or chlorine compound, and preferably of a fluorine compound. The carrier gas is preferably air. The fluorine compound is, for example, sulfur hexafluoride SF₆, or a Freon selected from those authorized under European regulations, such as C₂F₆. The chlorine compound may be chlorine gas Cl₂, for example. A valve connected to a gas supply placed outside the box serves to adjust the carrier gas flow rate. Another valve connected to the gas supply serves to adjust the content of fluorine or chlorine compound in the carrier gas. The carrier gas may be constituted solely by the fluorine or chlorine compound, preferably a fluorine compound, in the pure state.

The plasma is the seat of a chemical reaction between the presintering composition grains and the fluorine or chlorine, preferably fluorine compound. The temperature of the plasma lies in the range 5000 °C. to 10,000 °C., causing the presintering composition grains to melt. The fluorine or chlorine compounds react with the alkali elements such as sodium or lithium that are present in the presintering composition, causing the fluorides NaF or LiF or the chlorides NaCl or LiCl to be given off in gaseous form.

Good reaction efficiency is obtained under the following operating conditions:
plasma power 40kW to 100 kW
presintering composition 0.2 kg/h to 5 kg/h
flow rate
carrier gas flow rate 0 to 15 liters/min
fluorine compound content in 0.3% to 100%
carrier gas.

In the subject of the invention the presintering composition can be granules of metaloxides or metalloidoxides, which an prepared by dispersing the metaloxides or metalloidoxides in water, spray drying it and heating the granules obtained at a temperature of from 150 to 1.100 °C for a period of 1 to 8 h.

In a preferred subject of the invention the metaloxide or metalloidoxide can be silica granules, i.e.:
a) pyrogenically produced silicon dioxide which has been compacted to granules having
   - a tamped density of from 150 g/l to 800 g/l,
   - a granule particle size of from 10 to 800 µm
   - and a BET surface area of from 10 to 500 m²/g, or
b) pyrogenically produced silicon dioxide which has been compacted to granules, having the following physico-chemical data:
   mean particle diameter: from 25 to 120 µm,
   BET surface area: from 40 to 400 µm²/g;
   pore volume: from 0.5 to 2.5 ml/g,
   pore distribution: no pores with a diameter < 5 nm, only meso- and macro-pores are present,
   pH value: from 3.6 to 8.5,
   tamped density: from 220 to 700g/l.

The compacting step can be made according to U.S. Patent No. 5,776,240.

In a preferred embodiment of the invention, a pyrogenically produced silicon dioxide which has been granulated or compacted in a known manner according to U.S. Patent No. 5,776,240 can be used in the production of a presintered composition.

The silicon dioxide so compacted or granulated can be a pyrogenically produced oxide having a BET surface area of from 10 to 500 m²/g, a tamped density of from 150 to 800 g/l and a granule particle size of from 10 to 800 µm.

Hereinbelow, the expressions "pyrogenically produced silica", "pyrogenically produced silicon dioxide", "pyrogenic silica" and "pyrogenic silican dioxide " are to be understood as meaning very finely divided, nanoscale powders produced by converting gaseous silicon compounds, such as, for example, methyltrichlorosilane or silicon tetrachloride in a high-temperature flame, wherein the flame is fed with hydrogen and oxygen and water vapor can optionally be supplied thereto.

Hereinbelow, the term "granules" is to be understood as meaning pyrogenically produced silicon dioxide powders highly compacted by means of the compaction process described in U.S. Patent No. 5,776,240 or analogously to that process.

For the method according to the invention, either pyrogenically produced silicon dioxide which has been compacted to granules by means of a downstream compacting step according to DE 196 01 415 A1 is used, which corresponds to U.S.Patent No. 5,776,240, having a tamped density of from 150 g/l to 800 g/l, preferably from 200 to 500 g/l, a granule particle size of from 10 to 800 µm and a BET surface area of from 10 to 500 m²/g, preferably from 20 to 130 m²/g, or granules according to U.S.Patent No. 5,776,240, based on pyrogenically produced silicon dioxide are used, having the following physico-chemical data:
- mean particle diameter from 25 to 120 µm;
- BET surface area from 40 to 400 m²/g;
- pore volume from 0.5 to 2.5 ml/g;
- pore distribution: no pores with a diameter < 5 nm, only meso- and macro-pores are present;
- pH value from 3.6 to 8.5;
- tamped density from 220 to 700 g/l.

According to the invention the following presintering composition can be used:
a) A pyrogenically produced silicon dioxide having a BET surface area of 90 m²/g and a bulk density of 35 g/l and a tamped density of 59 g/l is compacted to a granulate according to U.S.Patent No. 5,776,240. The compacted silicon dioxide has a BET surface area of 90 m²/g and a tamped density of 246 g/l.
b) A pyrogenically produced silicon dioxide having a BET surface if 50 m²/g and a tamped density of 130 g/l is compacted to a granulate according to U.S.Patent No. 5,776,240. The compacted silicon dioxide has a BET surface area of 50 m²/g and a tamped density of 365 g/l.
c) A pyrogenically produced silicon dioxide having a BET surface area of 300 m²/g and a bulk density of 30 g/l and a tamped density of 50 g/l is compacted according to U.S.Patent No. 5,776,240. The compacted silicon dioxide has a BET surface area of 300 m²/g and a tamped density of 289 g/l.
d) A pyrogenically produced silicon dioxide having a BET surface area of 200 m²/g and a bulk density of 35 g/l and a tamped density of 50 g/l is compacted according to U.S. Patent No. 5,776,240. The compacted silicon dioxide has a BET surface area of 200 m²/g and a tamped density of 219 g/l.

The presintering composition to be used according to the invention can be granules based on pyrogenically prepared silicon dioxide doped with aluminium oxide by means of an aerosol, which granules have the following physico-chemical characteristic data:

| | |
|---|---|
| mean particle diameter: | from 10 to 150 µm |
| BET surface area: | from 25 to 100 m²/g |
| pH value: | from 3 to 6 |
| tamped density: | from 400 to 1200 g/l |

In a preferred embodiment of the invention, the granules may have the following physico-chemical characteristic data:

| | |
|---|---|
| mean particle diameter: | from 15 to 30 µm |
| BET surface area: | from 60 to 70 m²/g |
| pH value: | from 4 to 6 |
| tamped density: | from 400 to 650 g/l |

These granules can be produced by dispersing in water pyrogenically prepared silicon dioxide doped with aluminium oxide by means of an aerosol, spray drying the dispersion, and optionally tempering the resulting granules at a temperature of from 150 to 1100°C for a period of from 1 to 8 hours.

The pyrogenically prepared silicon dioxide doped with aluminium oxide by means of an aerosol may be a pyrogenically prepared silicon dioxide doped with aluminium oxide by means of an aerosol in which the base component is a silicon dioxide that has been prepared pyrogenically in the manner of flame oxidation or, preferably, of flame hydrolysis and that is doped with a doping component of from 1.10⁻⁴ and up to 20 wt.%, the doping amount preferably being in the range from 1 to 10,000 ppm and the doping component being a salt or a salt mixture of aluminium or a suspension of an aluminium compound or of metallic aluminium or mixtures thereof, the BET surface area of the doped oxide being from 5 to 600 m²/g, preferably in the range from 40 to 100 m²/g.

The silicon dioxide doped with aluminium oxide may have a DBP number of less than 100g/100g.

The pyrogenically prepared silicon dioxide doped with aluminium oxide by means of an aerosol can be prepared by feeding an aerosol into a flame such as is used for the pyrogenic preparation of silicon dioxide in the manner of flame oxidation or, preferably, of flame hydrolysis, mixing the aerosol homogeneously with the gas mixture of the flame oxidation or flame hydrolysis before the reaction, then allowing the aerosol/gas mixture to react to completion in the flame and separating the resulting pyrogenically prepared silicon dioxide doped with aluminium oxide from the gas stream in a known manner, there being used to produce the aerosol an aqueous solution containing salts or salt mixtures of aluminium or the metal itself in dissolved or suspended form or mixtures thereof, the aerosol being produced by atomisation by means of a two-component nozzle or by a different method of aerosol production, preferably by means of an aerosol generator by ultrasonic atomisation.

There may be used as salts: AlCl₃, Al₂(SO₄)₃, Al(NO₃)₃. This method is known from EP 0 995 718 A1.

The methods of flame hydrolysis for the preparation of pyrogenic oxides and also for the preparation of silicon dioxide (silica) are known from Ullmanns Enzyklopädie der technischen Chemie, 4th edition, Volume 21, page 464.

The spray drying may be carried out at a temperature of from 200 to 600°C. Disk-type atomisers or nozzle-type atomisers may be used.

Tempering of the granules may be carried out either in a stationary mass, such as, for example, in chamber ovens, or in a moving mass, such as, for example, rotary driers.

As presintering composition can be used: pyrogenically prepared silicon dioxide, doped with aluminium oxide by means of an aerosol. This is known from EP 0 995 718 A1.

The according to EP 0 995 718 A1 pyrogenically prepared silicon dioxide doped with aluminium oxide by means of an aerosol is dispersed in demineralised water. A dispersing unit that operates according to the rotor/stator principle is used. The resulting dispersions are spray dried. The finished product is separated off over a filter or a cyclone.

Tempering of the spray granules may take place in muffle furnaces.

The data for the production of the granules according to the invention are given in Table 1.

The data for the resulting granules are given in Table 2.

The resulting granules can be used in the method of the invention.

**Table 1:**

| Data related to spray-drying of alumina-doped silica dispersion | | | | | | |
|---|---|---|---|---|---|---|
| Test no. | Solids content oxide/H₂O [g/l] | Atomisation with | Atomising disk speed [rpm] | Operating temperature [°C] | Waste air temperature [°C] | Spray drier |
| 1 | 150 | disk | 20,000 | 380 | 105 | Niro SD 12.5 |
| 2 | 150 | disk | 10,000 | 380 | 105 | Niro SD 12.5 |
| 3 | 150 | two-component nozzle | - | 260 | 105 | Anhydro Compakt |
| 4 | 200 | two-component nozzle | - | 260 | 105 | Anhydro Compakt |
| 5 | 250 | two-component nozzle | - | 260 | 105 | Anhydro Compakt |
| 6 | 300 | two-component nozzle | - | 260 | 105 | Anhydro Compakt |
| 7 | 350 | two-component nozzle | - | 260 | 105 | Anhydro Compakt |
| 8 | 450 | two-component nozzle | - | 260 | 105 | Anhydro Compakt |
| 9 | 600 | two-component nozzle | - | 260 | 105 | Anhydro Compakt |
| 10 | 600 | two-component nozzle | - | 380 | 110 | Niro SD 12.5 |
| 11 | 600 | two-component nozzle | - | 420 | 106 | Niro SD 12.5 |
| 12 | 600 | disk | 20,000 | 380 | 107 | Niro SD 12.5 |

**Table 2:**

| Physico-chemical data of spray-dried alumina doped silica | | | | | | |
|---|---|---|---|---|---|---|
| Test no. | Tamped density [g/l] | Loss on drying [%] | Loss on ignition [%] | pH value | Spec. surface area (BET) [m²/g] | d₅₀ value (Cilas) [µm] |
| 1 | 527 | 0.3 | 0.2 | 4.7 | 63 | 18 |
| 2 | 536 | 0.6 | 0.3 | 5.7 | 63 | 24 |
| 3 | 455 | 0.8 | 0.3 | 4.8 | 63 | 19 |
| 4 | 504 | 0.5 | 0.5 | 5.5 | 63 | 21 |
| 5 | 532 | 0.5 | 0.5 | 4.5 | 62 | 26 |
| 6 | 536 | 0.3 | 0.5 | 4.8 | 63 | 22 |
| 7 | 559 | 0.4 | 0.6 | 5.1 | 62 | 25 |
| 8 | 550 | 0.9 | 0.2 | 5.0 | 62 | 23 |
| 9 | 601 | 0.3 | 0.5 | 5.1 | 62 | 21 |
| 10 | 603 | 0.4 | 0.5 | 5.7 | 63 | 18 |
| 11 | 618 | 0.3 | 0.6 | 5.1 | 63 | 24 |
| 12 | 578 | 0.2 | 0.5 | 5.9 | 65 | 23 |

The presintering composition or as metaloxide or metalloidoxide granules to be used according to the invention can be granules based on pyrogenic titanium dioxide with the following physico-chemical characteristics:

| | |
|---|---|
| Average particle diameter: | 10 to 150 µm |
| BET surface area: | 25 to 100 m²/g |
| pH: | 3 to 6 |
| Compacted density: | 400 to 1,200 g/l |

These granules can be prepared by dispersing pyrogenic titanium dioxide in water, spray-drying. They are known from the EP 1,078,883.

Spray-drying may be performed at a temperature of 200 to 600 °C. Spinning disc atomisers or nozzle atomisers may be used (Table 4). The resulting granules are described in table 5.

A titanium dioxide P 25 with the following physico-chemical characteristics is used as a pyrogenic titanium dioxide. It is disclosed in the series of documents called Pigments, no. 56 "Hochdisperse Metalloxide nach dem Aerosilverfahren", 4th edition, February 1989, Degussa AG (Table 3).

**Table 3**

| Physical-chemical datas of Titanium dioxide P 25 | |
|---|---|
| | **Titanium dioxide P25** |
| CAS no. | 13463-67-7 |
| Behaviour in water | hydrophilic |
| Appearance | loose white powder |
| BET surface area ¹⁾ m²/g | 50 ± 15 |
| Average size of primary particles nm | 21 |
| Compacted density ²⁾ g/l | about 100 |
| Specific weight ¹⁰⁾ g/l | about 3.7 |
| Loss on drying ³⁾ on leaving supplier (2 h at 105°C) % | < 1.5 |
| Loss on ignition ^{4) 7)} (2 h at 1000°C) | < 2 |
| pH ⁵⁾ (in 4% aqueous dispersion) | 3-4 |
| SiO₂ ⁸⁾ | < 0.2 |
| Al₂O₃ ⁸⁾ | < 0.3 |
| Fe₂O₃ ⁸⁾ | < 0.01 |
| TiO₂ ⁸⁾ | >99.5 |
| ZrO₂ ⁸⁾ | - |
| HfO₂ ⁸⁾ | - |
| HCl ⁹⁾ | < 0.3 |
| Sieve residue ⁶⁾ (Mocker's method, 45 µm) % | < 0.05 |

| | |
|---|---|
| 1) according to DIN 66131 2) according to DIN ISO 787/XI, JIS K 5101/18 (not sieved) 3) according to DIN ISO 787/II, ASTM D 280, JIS K 5101/21 4) according to DIN 55921, ASTM D 1208, JIS K 5101/23 5) according to DIN ISO 787/IX; ASTM D 1208; JIS K 5101/24 6) according to DIN ISO 787/XVIII; JIS K 5101/20 7) with respect to substance dried for 2 h at 105°C. 8) with respect to substance ignited for 2 h at 1000°C 9) HCl content is component of loss on ignition 10)determined with an air comparison density bottle | |

The titanium dioxides are prepared by spraying a volatile titanium compound into an oxyhydrogen flame formed from hydrogen and air. In most cases, titanium tetrachloride is used. This substance hydrolyses under the effect of the water being produced during the oxyhydrogen gas reaction to give titanium dioxide and hydrochloric acid. After leaving the flame, the titanium dioxide enters a so-called coagulation zone in which the titanium dioxide primary particles and primary aggregates agglomerate. The product, present at this stage as a kind of aerosol, is separated from the gaseous accompanying substances in cyclones and is then post-treated with moist hot air.

The particle sizes of the titanium dioxides may be varied by varying the reaction conditions such as, for example, temperature of the flame, proportion of hydrogen or oxygen, amount of titanium tetrachloride, residence time in the flame or the length of the coagulation zone.

The pyrogenic titanium dioxide is dispersed according to EP 1 078 883 A1 in fully deionised water. A dispersing apparatus is used which operates on the rotor/stator principle. The dispersions being produced are spray-dried. Deposition of the final product is achieved using a filter or a cyclone.

**Table 4**

| Data relating to spray-drying aqueous TiO₂ P25 dispersions | | | | | | | |
|---|---|---|---|---|---|---|---|
| **Example** | **Amount of H₂O [kg]** | **Amount of TiO₂P25 [kg]** | **Atomised using** | **Speed ofatomising disc [rpm]** | **Operating temp. [°C]** | **Vent air temp. [°C]** | **Deposition** |
| 1 | 10 | 1.5 | disc | 35 000 | 345 | 100 | cyclone |
| 2 | 10 | 1.5 | disc | 45 000 | 370 | 105 | cyclone |
| 3 | 10 | 1.5 | disc | 20 000 | 350 | 95 | cyclone |
| 4 | 10 | 2.5 | disc | 15 000 | 348 | 100 | cyclone |
| 5 | 100 | 15 | 2-fluid nozzle | --- | 445 | 130 | filter |
| 6 | 100 | 15 | disc | 10 000 | 450 | 105 | filter |
| 7 | 10 | 2.5 | disc | 20 000 | 348 | 105 | cyclone |
| 8 | 10 | 1.5 | disc | 15 000 | 348 | 105 | cyclone |
| 9 | 10 | 2.5 | disc | 35 000 | 300 | 105 | cyclone |

**Table 5**

| Physico-chemical data of spray-dried TiO₂ P 25 dispersions | | | | | | |
|---|---|---|---|---|---|---|
| Example | BET surface area [m²/g] | Compacted density [g/l] | pH | d₅₀ value (Cilas) [µm] | Loss on drying [%] | Loss on ignition [%] |
| 1 | 51 | 641 | 3.9 | 14.6 | 0.9 | 0.9 |
| 2 | 50 | 612 | 3.7 | 10.6 | 0.8 | 1.0 |
| 3 | 52 | 680 | 3.5 | 25.0 | 0.8 | 1.0 |
| 4 | 51 | 710 | 3.7 | 43.6 | 0.8 | 1.2 |
| 5 | 52 | 660 | 4.0 | 17.1 | 0.9 | 0.9 |
| 6 | 53 | 702 | 3.9 | 27.5 | 0.9 | 0.9 |
| 7 | 50 | 708 | 3.5 | 26.7 | 1.1 | 0.6 |
| 8 | 53 | 696 | 3.9 | 30.1 | 1.0 | 0.9 |
| 9 | 49 | 640 | 3.7 | 16.0 | 0.7 | 0.8 |

The sintering composition or the metal oxides or metalloid oxide granules to be used according to the invention may be granules based on pyrogenically produced aluminium oxide having the following physicochemical characteristics:

| | |
|---|---|
| Mean grain diameter: | 8.0 to 15.0 µm |
| Compacted bulk density: | 400 to 1,200 g/l |

In a preferred embodiment of the invention the granules may have a mean grain diameter of 8.0 to 41 µm and a compacted bulk density of 450 to 550 g/l.

The granules according to the invention may be produced by dispersing pyrogenically produced aluminium oxide in water, and spray drying and optionally tempering the granules obtained at a temperature from 150° to 1,100°C for a period of 1 to 8 hours.

As educt there may be used an aluminium oxide such as is described in Ullmann's Enzyklopädie der technischen Chemie, 4th Edition, Vol. 21, p. 464 (1982).

There may furthermore be used as educt a pyrogenically produced aluminium oxide with a high surface area and having a specific surface according to BET of more than 115 m²/g, and a Sears number of more than 8 ml/2g.

With this aluminium oxide the dibutyl phthalate absorption of the powder measured on a 16 g weighed portion is no longer measurable (no end point recognition).

This pyrogenically produced aluminium oxide may be produced by a flame oxidation technique or preferably by flame hydrolysis, in which a vaporisable aluminium compound, preferably the chloride, is used as staring material. This aluminium oxide is described in DE 199 43 291.0-41.

The spray drying may be carried out at a temperature from 200° to 600°C. In this connection spray-disc atomisers or nozzle atomisers may be used, such as for example a single-substance nozzle or a gas-atomising nozzle.

The tempering of the granules may be carried out in a fixed bed, such as for example in chamber furnaces, as well as in a fluid bed, such as for example rotary dryers.

### Example 1

320 kg/hr. of previously vaporised aluminium trichloride (AlCl₃) together with 100 Nm³/hr. of hydrogen and 450 Nm³/hr. of air are combusted together in a burner of known design and construction.

The finely particulate, high surface area aluminium oxide is separated after the flame reaction in a filter or cyclone from the hydrochloric acid gases that are also formed, any still adhering HCl traces then being removed by treatment with moist air at elevated temperature.

The high surface area pyrogenic aluminium oxide that is produced has the physicochemical characteristics listed in Table 6. The data relating to the pyrogenic aluminium oxide commercially available from Degussa-Hüls AG/Frankfurt (trade name aluminium oxide C) are also listed in Table 7 for purposes of comparison.

**Table 6:**

| | Unit | High Surface Area Aluminium Oxide Alu 130 | Aluminium Oxide C |
|---|---|---|---|
| BET Specific Surface | m²/g | 121 | 100 |
| Sears No. (pH 4 to 9) | ml/2g | 9.38 | 7.05 |
| pH | 4% aqueous dispersion | 4.93 | 4.5 |
| Drying Loss | wt.% | 3.3 | 3.0 |
| Bulk Density | g/l | 55 | 48 |
| Compacted Bulk Density | g/l | 63 | 57 |
| DBP Absorption | wt.% | Not measurable; no end point can be established | 231 |

| | | | |
|---|---|---|---|
| DBP: dibutyl phthalate | | | |

The measurement of the Sears number is described in EP 0 717 088.

### Example 2

An aluminium oxide having the following physicochemical characteristics is used as pyrogenically produced aluminium oxide, and is described in the pigment information leaflet no. 56 "Highly Dispersed Metal Oxides According to the Aerosil Process", 4th Edition, February 1989, Degussa AG (Table 7).

**Table 7**

| | | **Aluminium Oxide C** |
|---|---|---|
| CAS Reg. Number | | 1344-28-1 |
| Surface according to BET¹⁾ | m²/g | 100 ± 15 |
| Mean size of the primary particles | nm | 13 |
| Compacted bulk density²⁾ g/l | g/l | ca. 80 |
| Specific weight¹⁰⁾ | g/ml | ca. 3.2 |
| Drying loss³⁾ on leaving the supplier's factory (2 hours at 105°C) | % | < 5 |
| Annealing loss^{4) 7)} (2 hours at 1000°C) | % | < 3 |
| pH value⁵⁾ (in 4% aqueous dispersion) | | 4.5-5.5 |
| SiO₂⁸⁾ | | < 0.1 |
| Al₂O₃⁸⁾ | | < 99.6 |
| Fe₂O₃⁸⁾ | | < 0.2 |
| TiO₂⁸⁾ | | > 0.1 |
| ZrO2⁸⁾ | | - |
| HfO2⁸⁾ | | - |
| HCI⁸⁾⁹⁾ | | < 0.5 |
| Sieving residue⁶⁾ (according to Mocker, 45 µm) | % | < 0.05 |

| | | |
|---|---|---|
| 1) according to DIN 66131 2) according to DIN ISO 787/XI, JIS K 5101/18 (not sieved) 3) according to DIN ISO 787/II, ASTM D 280, JIS K 5101/21 4) according to DIN 55921, ASTM D 1208, JIS K 5101/23 5) according to DIN ISO 787/IX;ASTM D !"=(; JIS K 5101/24 6) according to DIN ISO 787/XVIII; JIS K 5101/20 7) referred to the substance dried for 2 hours at 105°C 8) referred to the substance annealed for 2 hours at 1000°C 9) HCI content is part of the annealing loss 10) measured with an air comparison pycnometer | | |

To produce the aluminium oxides, a volatile aluminium compound is injected through a nozzle into an oxyhydrogen flame consisting of hydrogen and air. In most cases aluminium trichloride is used. This substance hydrolyses under the influence of the water produced in the oxyhydrogen reaction, to form aluminium oxide and hydrochloric acid. After leaving the flame the aluminium oxide enters a so-called coagulation zone in which the aluminium oxide primary particles and aluminium oxide primary aggregates agglomerate. The product present in the form of an aerosol in this stage is separated from the gaseous accompanying substances in cyclones and is then post-treated with moist hot air.

The particle sizes of the aluminium oxides may be varied by means of the reaction conditions, such as for example the flame temperature, proportion of hydrogen or oxygen, amount of aluminium trichloride, residence time in the flame, or length of the coagulation section.

### Production of the granules according to the invention

The pyrogenically produced aluminium oxide is dispersed in fully deionised water. A dispersing device is used that operates according to the rotor/stator principle. The dispersions formed are spray dried. The finished product is separated using a filter or cyclone.

The tempering of the spray granules may be carried out in a muffle furnace.

The production conditions are given in Table 8. The data relating to the products obtained are listed in Table 9.

**Table 8**

| Data relating to the spray drying of aqueous Al₂O₃ dispersions | | | | | | | |
|---|---|---|---|---|---|---|---|
| **Exprmntl. Ref. No.** | **Amount H₂O [kg]** | **Amount Al₂O₃ [kg]** | **Atomisation with** | **Rotational speed of spray-disc atomiser [rpm]** | **Operating temperature [°C]** | **Waste air temperature [°C]** | **Spray drier** |
| 1 | 100 | 15 | Single-substance nozzle | - | 420 | 105 | Niro SD 12. 5 |
| 2 | 100 | 10 | Single-substance nozzle | - | 412 | 102 | Niro SD 12.5 |
| 3 | 5 | 0.75 | Disc | 15 000 | 298 | 1058 | Niro Minor |
| 4 | 16.5 | 2.50 | Disc | 25 000 | 300 | 107 | Niro Minor |
| 5 | 20 | 3.0 | Disc | 35 000 | 300 | 105 | Niro Minor |
| 6 | 8 | 1.2 | Disc | 20 000 | 298 | 106 | Niro Minor |
| 7 | 600 | 90 | Disc | 10 000 | 437 | 100 | Niro SD 12.5 |
| 8 | 300 | 45. | Disc | 20 000 | 458 | 100 | Niro SD 12.5 |
| 9 | 50 | 7.5 | Gas-atomising nozzle | - | 260 | 105 | Anhydro Compakt |
| 10 | 300 | 45 | Gas-atomising nozzle | - | 458 | 108 | Niro SD 12.5 |
| 11 | 200 | 30 | Gas-atomising nozzle | - | 457 | 100 | Niro SD 12.5 |
| 12 | 4.25 | 0.75 | Gas-atomising nozzle | - | 380 | 105 | Niro Minor |

**Table 9**

| Physicochemical data of the spray-dried alumina | | | | | |
|---|---|---|---|---|---|
| **Exprmnt1. Ref. No.** | **Compacted Bulk Density [g/l]** | **Drying Loss [%]** | **Annealing Loss [%]** | **pH Value** | **d₅₀ Value (Cilas) [µm]** |
| 1 | 505 | 2.3 | 2.3 | 5.0 | 39.4 |
| 2 | 502 | 1.8 | 2.0 | 4.9 | 40.9 |
| 3 | 473 | 1.4 | 2.7 | 4.9 | 31.1 |
| 4. | 471 | 1.5 | 2.4 | 5.1 | 20.5 |
| 5 | 466 | 1.5 | 2.6 | 5.0 | 14.5 |
| 6 | 477 | 1.5 | 1.5 | 5.4 | 27.7 |
| 7 | 525 | 1.6 | 1.9 | 5.0 | 39.3 |
| 8 | 474 | 1.5 | 2.8 | 4.8 | 27.6 |
| 9 | 506 | 3.4 | 2.1 | 5.0 | 28.0 |
| 10 | 533 | 1.9 | 2.5 | 5.0 | 30.6 |
| 11 | 516 | 1.8 | 2.5 | 4.7 | 25.8 |
| 12 | 483 | 1.7 | 2.6 | 4.9 | 8.8 |

In the above example, the choice of a plasma torch does not restrict the generality of the method which can also be implemented by any other means for delivering heat energy and creating a temperature greater than 100 °C., and in particular by means of a flame from a combustion device.

## Claims

1. A method of producing glass of optical quality by melting or optionally by purifying a presintering composition which is granules of metaloxides or metalloidoxides, which an prepared by dispersing the metaloxides or metalloidoxides in water, spray drying it and heating the granules obtained at a temperature of from 150 to 1.100 °C for a period of 1 to 8 h, in which a plasma or a flame from a heat energy supply means is fed by a first feed duct with granules of said presintering composition, wherein optionally a second feed duct feeds the plasma or flame with a fluorine or chlorine compound mixed with a carrier gas, the feed conditions of the two ducts are adjusted to cause alkali or alkaline-earth elements contained in the presintering composition to react with the fluorine or the chlorine of the fluorine or chlorine compound.

2. A method of depositing a presintering composition which is granules of metaloxides or metalloidoxides, which an prepared by dispersing the metaloxides or metalloidoxides in water, spray drying it and heating the granules obtained at a temperature of from 150 to 1.100 °C for a period of 1 to 8 h, on optical devices using the method according to claim 1, in which a preform extending in a longitudinal direction is set into move about its axis in front of a plasma or flame coming from a heat energy supply means which moves back and forth substantially parallel to the longitudinal direction of the preform, and in which a first feed duct feeds the plasma or the flame with grains of a presintering composition, wherein optionally a second feed duct feeds the plasma or flame with a fluorine or chlorine compound mixed with a carrier gas, the feed conditions of the two ducts being adjusted to cause alkali or alkaline-earth elements contained in the grains of a presintering composition to react with the fluorine or the chlorine of the fluorine or chlorine compound. granules

## Patentansprüche

1. Verfahren zur Herstellung von Glas von optischer Qualität durch Schmelzen oder optional durch Reinigen einer Vorsinterzusammensetzung, wobei es sich um Granalien von Metalloxiden oder Metalloidoxiden handelt, die durch Dispergieren der Metalloxide oder Metalloidoxide in Wasser, Sprühtrocknen und Erwärmen der erhaltenen Granalien bei einer Temperatur von 150 bis 1 100°C während eines Zeitraums von 1 bis 8 h hergestellt werden, bei welchem ein Plasma oder eine Flamme von einer Wärmeenergie-Versorgungseinrichtung durch eine erste Zuführungsleitung mit Granalien der Vorsinterzusammensetzung gespeist wird, wobei gegebenenfalls eine zweite Zuführungsleitung das Plasma oder die Flamme mit einer mit einem Trägergas vermischten Fluor- oder Chlorverbindung gespeist, die zuführbedingungen der zwei Leitungen so eingestellt werden, dass sie bewirken, dass in der Vorsinterzusammensetzung enthaltene Alkali- oder Erdalkalielemente mit dem Fluor oder dem Chlor der Fluor- oder Chlorverbindung reagieren.

2. Verfahren zum Abscheiden einer Vorsinterzusammensetzung, wobei es sich um Granalien von Metalloxiden oder Metalloidoxiden handelt, die durch Dispergieren der Metalloxide oder Metalloidoxide in Wasser, Sprühtrocknen und Erwärmen der erhaltenen Granalien bei einer Temperatur von 150 bis 1 100°C während eines Zeitraums von 1 bis 8 h hergestellt werden, auf optischen Vorrichtungen unter Anwendung des Verfahrens gemäß Anspruch 1, in welchem eine Vorform, die sich in Längsrichtung erstreckt, um ihre Achse vor einem von einer Wärmeenergieversorgungseinrichtung kommenden Plasma oder Flamme in Bewegung gesetzt wird, welche sich zurück und vor im Wesentlichen parallel zu der Längsrichtung der Vorform bewegt, und in welchem eine erste Zuführungsleitung das Plasma oder die Flamme mit Körnern einer Vorsinterzusammensetzung gespeist, wobei gegebenenfalls eine zweite zuführungsleitung das Plasma oder die Flamme mit einer mit einem Trägergas vermischten Fluor- oder Chlorverbindung gespeist, wobei die Zuführungsbedingungen der zwei Leitungen so eingestellt werden, dass sie bewirken, dass in den Körnern einer Vorsinterzusammensetzung enthaltene Alkali- oder Erdalkalielemente mit dem Fluor oder dem Chlor der Fluor- oder Chlorverbindung reagieren.

## Revendications

1. Procédé de fabrication de verre de qualité optique par fusion ou éventuellement par purification d'une composition de préfrittage qui consiste en des granulés d'oxydes métalliques ou d'oxydes métalloïdes, qui sont préparés en dispersant les oxydes métalliques ou les oxydes métalloïdes dans de l'eau, en les séchant par atomisation et en chauffant les granulés obtenus à une température de 150 à 1100°C sur une durée de 1 à 8 h, dans lequel un plasma ou une flamme d'une source d'énergie thermique est alimenté par un premier conduit d'alimentation avec des granulés de ladite composition de préfrittage, dans lequel, éventuellement, un deuxième conduit d'alimentation alimente le plasma ou la flamme avec un composé du fluor ou du chlore mélangé à un gaz vecteur, les conditions d'alimentation des deux conduits étant ajustées pour faire réagir les éléments alcalins ou alcalino-terreux contenus dans la composition de préfrittage avec le fluor ou le chlore du composé du fluor ou du chlore.

2. Procédé de dépôt d'une composition de préfrittage, qui consiste en des granulés d'oxydes métalliques ou d'oxydes métalloïdes, qui sont préparés en dispersant les oxydes métalliques ou les oxydes métalloïdes dans de l'eau, en les séchant par atomisation et en chauffant les granulés obtenus à une température de 150 à 1100°C sur une durée de 1 à 8 h, sur des dispositifs optiques en utilisant le procédé selon la revendication 1, dans lequel une préforme s'étendant dans une direction longitudinale est mise en mouvement autour de son axe devant un plasma ou une flamme provenant d'une source d'énergie thermique qui se déplace d'avant en arrière de façon sensiblement parallèle à la direction longitudinale de la préforme, et dans lequel un premier conduit d'alimentation alimente le plasma ou la flamme avec des grains de la composition de préfrittage, dans lequel, éventuellement, un deuxième conduit d'alimentation alimente le plasma ou la flamme avec un composé du fluor ou du chlore mélangé à un gaz vecteur, les conditions d'alimentation des deux conduits étant ajustées pour faire réagir les éléments alcalins ou alcalino-terreux contenus dans les grains de la composition de préfrittage avec le fluor ou le chlore du composé du fluor ou du chlore.
